# EUROPÄISCHE PATENTSCHRIFT

(11) **EP 0 585 439 B1**
(45) Veröffentlichungstag und Bekanntmachung des Hinweises auf die Patenterteilung: **29.01.1997**
(21) Anmeldenummer: 93906512.4
(22) Anmeldetag: 12.03.1993
(51) Int. Cl.: B01D 53/72, B01D 53/74, B01D 53/86, B01D 53/34, F23G 7/06

(54) **VERFAHREN ZUR VERRINGERUNG DER BETRIEBSMITTELVERSCHMUTZUNG BEI VAKUUMPUMPEN BEI DER REINIGUNG VON ABGASEN AUS VAKUUMPYROLYSEANLAGEN UND/ODER EXTRUSIONSPROZESSEN**
PROCESS FOR REDUCING THE POLLUTION OF OPERATING FLUIDS OF VACUUM PUMPS WHEN PURIFYING EXHAUST GASES FROM VACUUM PYROLYSIS INSTALLATIONS AND/OR EXTRUSION PROCESSES
PROCEDE DE REDUCTION DE LA POLLUTION DES FLUIDES DE SERVICE LORS DE L'EPURATION DES GAZ D'EVACUATION PROVENANT DES INSTALLATIONS DE PYROLYSE SOUS VIDE ET/OU DES PROCEDES D'EXTRUSION

(30) Priorität: 13.03.1992 DE 4208151
(43) Veröffentlichungstag der Anmeldung: 09.03.1994
(73) Patentinhaber: Rieter Automatik GmbH, D-63757 Grossostheim (DE)
(72) Erfinder: GLAWION, Erwin, D-8754 Gro ostheim 2 (DE)
(74) Vertreter: Bardehle, Heinz, Dipl.-Ing.
(86) Internationale Anmeldenummer: EP9300574
(87) Internationale Veröffentlichungsnummer: WO9317779

(56) Entgegenhaltungen:
- EP-A- 0 385 411
- EP-A- 0 485 787
- DE-A- 3 243 813
- DE-A- 4 003 668
- DE-A- 4 014 517
- US-A- 4 625 661
- US-A- 4 625 661
- RÖMPP CHEMIELEXIKON, 9 AUFLAGE, 1990, SEITE 2152

## Beschreibung

Die Erfindung bezieht sich auf ein Verfahren zur Verringerung der Betriebsmittelverschmutzung bei Vakuumpumpen bei der Reinigung von Abgasen aus Vakuumpyrolyseanlagen und/oder Extrusionsprozessen mittels Absaugen der Abgase und deren Verbrennen bei Luftzufuhr.

Bisher hat man derartige Abgase abgesaugt und anschließend einer eigenen Verbrennung unterworfen, woraufhin die gasförmigen Verbrennungsprodukte in die Atmosphäre entlassen wurden. Je nach verwendeter Absaugeinrichtung besteht dabei in mehr oder minder großem Umfang die Möglichkeit, daß die Abgase mit ihren gegebenenfalls schädlichen Bestandteilen die Absaugeinrichtung beeinträchtigen, insbesondere ein in der Absaugeinrichtung verwendetes Betriebsmittel, z.B. Wasser oder Öl. Die Beeinträchtigung des Betriebsmittels geht dabei so weit, daß das Betriebsmittel als Sondermüll entsorgt werden muß, und damit gesetzliche Vorschriften zur Sondermüllentsorgung, die in der Regel mit einem Genehmigungsverfahren einzuleiten sind, Anwendung finden. Dies stellt auf jeden Fall eine erhebliche Komplikation des bekannten Verfahrens dar.

Der Erfindung liegt die Aufgabe zugrunde, die Reinigung der Abgase so zu gestalten, daß dabei weder die Absaugeinrichtung noch irgendein Betriebsmittel in der Absaugeinrichtung beeinträchtigt werden können. Erfindungsgemäß wird das Problem durch die im Kennzeichen des Anspruchs 1 angegebenen Merkmale gelöst.

Vorzugsweise handelt es sich bei den Abgasen aus Vakuumpyrolyseanlagen um Toluol und/oder Benzol, und bei den Abgasen aus Extrusionsprozessen um Monomere, wie z. B. Caprolactam, und/oder Oligomere, vorzugsweise die kurzkettige komplexere Verbindungen von Monomeren aus Polymerschmelzen sind.

Durch die Verbrennung der Abgase werden sowohl für die Absaugeinrichtung als auch ein darin verwendetes Betriebsmittel unschädliche Verbrennungsprodukte, vorzugsweise z. B. CO₂ und/oder H₂O, erzeugt. Damit nun die bei der Verbrennung der Abgase entstehenden hohen Temperaturen der Verbrennungsprodukte die Absaugeinrichtung, die hier als Vakuumpumpe ausgebildet ist, nicht beschädigen können, ist unmittelbar nach dem Entstehen der Verbrennungsprodukte (gasförmige Reaktionsprodukte) die Kühlstufe vorgesehen, die dafür sorgt, daß die gasförmigen Reaktionsprodukte soweit abgekühlt werden, nämlich auf 10 bis 25 °C, daß sie eine nachgeschaltete Vakuumpumpe nicht mehr beschädigen können. Bei der Vakuumpumpe handelt es sich vorzugsweise um eine Flüssigkeitsring-Vakuumpumpe. In einer anderen bevorzugten Ausführungsform wird eine Drehschieberpumpe verwendet. Für Zwecke einer Drehschieberpumpe wird der Bereich der Kühlung auf 10 bis 200 °C erweitert, bevorzugt 100 bis 200 °C. Nach der Verbrennung der Abgase zu unschädlichen, gasförmigen Reaktionsprodukten, wobei die Verbrennung bei einem durch die Vakuumpumpe erzeugten Unterdruck von 0.5 bis 0.95 bar (500 bis 50 mbar absolut) stattfindet, und der anschließenden Kühlung der gasförmigen Reaktionsprodukte, können dann die gasförmigen Reaktionsprodukte keine Schädigung der Vakuumpumpe mehr hervorrufen, so daß die gekühlten gasförmigen Reaktionsprodukte sowie das Kühlwasser aus dem Sprühkondensator mit der Vakuumpumpe abgesaugt und ins Freie entlassen werden können. Für Zwecke einer Drehschieberpumpe wird der Bereich des Unterdrucks, der von der Vakuumpumpe erzeugt wird, auf 0.5 bis 0.99 bar (500 bis 10 mbar absolut) erweitert.

Die oben genannten Flüssigkeitsring-Vakuumpumpen gehören allgemein zur Gruppe der Verdrängerpumpen. Die Förderung des abzusaugenden Gases erfolgt bei diesen Pumpen mit Hilfe einer kreisenden Flüssigkeit, dem Flüssigkeitsring. Dieser Typ von Vakuumpumpen eignet sich zur Förderung von Gasen und Dämpfen nahezu aller Art, sofern zur Bildung des Flüssigkeitsringes eine geeignete Flüssigkeit (d.h. Betriebsmittel) - im Normalfall Wasser - gewählt wird. Bei der vorliegenden Erfindung ist Wasser bevorzugt.

In einem nur zum Teil mit Flüssigkeit gefüllten, zylindrischen Gehäuse ist ein Flügelrad exzentrisch angeordnet. Aufgrund der Rotation des Flügelrades bildet die Flüssigkeit einen konzentrisch zur Gehäuseachse rotierenden Ring. Durch diese Anordnung wird erreicht, daß die Betriebsflüssigkeit kolbenartig aus den Radzellen aus- und wieder eintritt. Infolge der Rotation des Flügelrades werden diese Gase und Dämpfe in Drehrichtung weiter gefördert, wobei sich die Zellen wieder verkleinern. Die abgepumpten Gase und Dämpfe werden dadurch verdichtet und mit einem Teil der Betriebsmittel aus dem Inneren der Pumpe ausgestoßen.

Die beim Betrieb der Pumpe entstehende Wärme wird über das Betriebsmittel abgeführt, weshalb zur Kühlung stets neues Betriebsmittel zugeführt werden muß. Das Betriebsmittel-Gas-Gemisch wird in einem nachfolgenden Flüssigkeits-Abschneider (d.h. Separator) wieder voneinander getrennt, wobei ein Teil des Betriebsmittels wieder der Vakuumpumpe zugeführt werden kann.

Die oben erwähnten Drehschieberpumpen arbeiten, wie der Name schon sagt, nach dem Drehschieberprinzip. Ein exzentrisch gelagerter Rotor dreht sich in einem Zylinder. Durch die Zentrifugalkraft der Drehbewegung werden Schieber, die in Schlitzen im Rotor gleiten, an die Zylinderwand gedrückt, wobei die Schieber den sichelförmigen Raum zwischen Zylinder und Rotor in Kammern einteilen. Bei Verbindung der Kammern mit dem Saugkanal wird das Gas angesaugt, bei weiterer Drehung verdichtet und anschließend mit dem Betriebsmittel in einen Betriebsmittelabscheider ausgestoßen und dort wieder von diesem getrennt. Das Betriebsmittel, bevorzugt Öl, sammelt sich unten im Abscheider und wird wieder in den Verdichtungsraum eingespritzt (Umlaufschmierung). Die betriebsmittelfreie Abluft wird dann an die Atmosphäre abgegeben.

Das erfindungsgemäße Verfahren kann daher kontinuierlich zur Reinigung von Abgasen verwendet werden, ohne daß dabei irgendeine Gefährdung der in ihm enthaltenen Organe entstehen kann. In einer weniger bevorzugten Ausführungsform wird das erfindungsgemäße Verfahren diskontinuierlich verwendet.

Vorzugsweise wird die Verbrennung der Abgase bei kontrollierter Luftzufuhr bei schwermetall- und chlorfreiem Abgas in Anwesenheit eines Katalysators bei Temperaturen von 350 bis 500 °C durchgeführt, bei Abgasen mit Katalysatorgiften, wie z. B. Schwermetall- und Chlorverbindungen, thermisch bei Temperaturen von 850 bis 1200 °C. Als Katalysator kommt hierbei vor allem ein mit Platin beschichteter Metallträger in Frage, vorzugsweise ähnlich einem Autokatalysator, der bevorzugt zur Oxidation aliphatischer und aromatischer Kohlenwasserstoffe mit bis zu 7 C-Atomen geeignet ist.

Vorteilhaft kann man die gasförmigen Reaktionsprodukte nach ihrer Kühlung durch einen Abscheider leiten, der bestimmte wasserlösliche Gase zusammen mit dem von der Vakuumpumpe ausgetragenen Betriebsmittel und abgesaugten Kühlwasser aus dem Sprühkondensator vom Gasstrom trennt.

Zur Kühlung läßt sich vorteilhaft ein Sprühkondensator oder ein Wärmeaustauscher verwenden, wobei letzterer die in ihn abgegebene Wärme weiterhin als Energie verwendbar macht.

Die Vorrichtung zur Durchführung des Verfahrens gestaltet man zweckmäßig so, daß ihre einzelnen Organe in der Reihenfolge Verbrennungseinrichtung, Kühleinrichtung und Vakuumpumpe angeordnet sind, wobei also die Vakuumpumpe die gasförmigen Reaktionsprodukte bereits gekühlt erhält und von diesen damit nicht mehr geschädigt werden kann.

Diese Ausgestaltung ist aber schon bekannt, siehe DE-A-3 243 813 und DE-A-4 014 517.

Als Verbrennungseinrichtung kann man zweckmäßig einen Hochtemperaturofen verwenden. Im Falle der Verwendung eines Katalysators kann dieser zweckmäßig so gestaltet werden, daß vor dem Katalysator ein Lufterhitzer mit Glühdrähten angeordnet ist.

In den Figuren sind Ausführungsbeispiele der Erfindung dargestellt.

Es zeigen:
- Fig. 1: eine Vorrichtung zur katalytischen Abgasreinigung;
- Fig.2: eine Vorrichtung zur Abgasreinigung mit thermischer Verbrennung.
- Fig. 3: eine Vorrichtung zur katalytischen Abgasreinigung, bei der ein Wärmetauscher zur Kühlung vorgesehen ist.

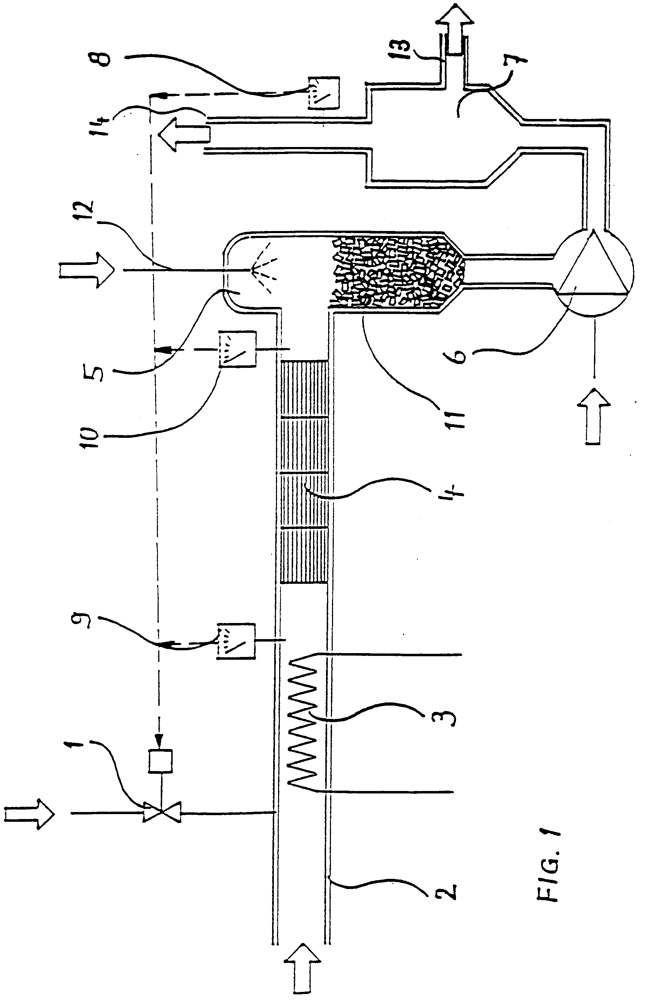

Die in der Figur 1 dargestellte Vorrichtung zur Abgasreinigung enthält das vakuumdichte Rohr 2, durch das die zu reinigenden Abgase zugeführt werden (siehe eingezeichneter Pfeil). Dem Rohr 2 wird über das Regelventil 1 zusätzlich Luft zugeführt, um im Rohr 2 ein für eine Verbrennung notwendiges Gasgemisch mit einem ausreichenden Anteil an Sauerstoff zu erzeugen. In dem Rohr 2 ist der als elektrische Heizspirale ausgebildete elektrische Lufterhitzer 3 angeordnet, der das durchgeleitete Gasgemisch auf eine für die katalytische Verbrennung erforderliche Temperatur von 350 bis 500 °C erwärmt. Alternativ kann auch nur die über das Regelventil 1 zugeführte Luft mit einem Lufterhitzer erwärmt und mit den zu reinigenden Abgasen gemischt werden (nicht dargestellt). Zur Vermeidung von Energieverlusten ist das Rohr 2 mit einer Wärmeisolation versehen. In Stromrichtung hinter den Lufterhitzer 3 ist der Temperaturfühler 9 eingebaut, der die Temperatur der Gase hinter dem Lufterhitzer 3 anzeigt und durch Einwirkung auf das Regelventil 1 den Lufterhitzer 3 zur Vermeidung der Überhitzung und Schädigung des Lufterhitzers 3 und des nachfolgenden Katalysators 4 steuert und überwacht. Somit stehen für den nachfolgenden Katalysator 4 immer optimale Lufttemperaturen zur Erreichung optimaler Verbrennungswerte zur Verfügung.

Die somit aufgeheizten Gase gelangen dann in den Bereich des Katalysators 4, in dem die katalytische Verbrennung der zugeführten Gase stattfindet, wobei chemisch unschädliche Reaktionsprodukte entstehen. Da sich durch die Verbrennung die Gastemperatur erhöht, ist ein weiterer Temperaturfühler 10 vorgesehen, dessen Signal ähnlich dem Signal des Temperaturfühlers 9 so genutzt wird, daß eine Schädigung des Katalysators 4 sowie eine unzureichende Verbrennung der Gase vermieden wird. Die Reaktionsprodukte gelangen sodann in den Sprühkondensator 5, der mit Füllkörpern 11, z. B. Raschig-Ringen, teilweise angefüllt ist, mit dem die auf die zugeführten Gase wirkende Oberfläche entsprechend erhöht wird. Dem Sprühkondensator 5 wird Wasser über die Zuleitung 12 zugeführt, das im Inneren des Sprühkondensators 5 zerstäubt wird, wobei sich der gewünschte Kühleffekt für die zugeführten Gase ergibt. Im Anschluß an den Sprühkondensator 5 ist die Vakuumpumpe 6 angeordnet, mit der im Bereich der Verbrennung und des Sprühkondensators 5 ein Unterdruck von 0.5 bis 0.95 bar (500 bis 50 mbar absolut) erzeugt wird. Dieser Bereich wird für Zwecke einer Drehschieberpumpe auf 0.5 bis 0.99 bar (500 bis 10 mbar absolut) erweitert. An den Ausgang der Vakuumpumpe 6 ist der Separator 7 angeordnet, der die Flüssigkeit, die bestimmte in Wasser lösliche Gase sowie aus der Vakuumpumpe ausgetragenes Betriebsmittel und abgesaugtes Kühlwasser aus dem Sprühkondensator umfaßt, vom Gasstrom abscheiden kann. Das im Separator 7 ankommende Gas-Flüssig-Gemisch wird derart getrennt, daß die Flüssigkeit mit den darin gelösten Gasen über den Stutzen 13 abfließt. In der Flüssigkeit nicht gelöste Gase werden über den Stutzen 14 abgeleitet. Aus Sicherheitsgründen wird ihre Temperatur mittels des Meßinsruments 8 gemessen, das die Konzentration der unverbrannten Gase mißt, und über Rückkoppelung mit dem Regelventil 1 damit den Anteil von explosionsfähigen brenn- oder umwandelbaren Anteilen der Verbrennungsrückstände überwacht und steuert.

Um den Funktionsablauf in der Vorrichtung zu automatisieren, kann man die Messergebnisse der Temperaturfühler 8 und 9 und des Meßinstruments 10 über einen Rechner zusammenfassen, der dann aus der Verknüpfung der Messergebnisse ein Signal ermitteln kann, das das Regelventil 1 so steuert, daß jederzeit die für die Verbrennung erforderliche Luftmenge zugeführt wird.

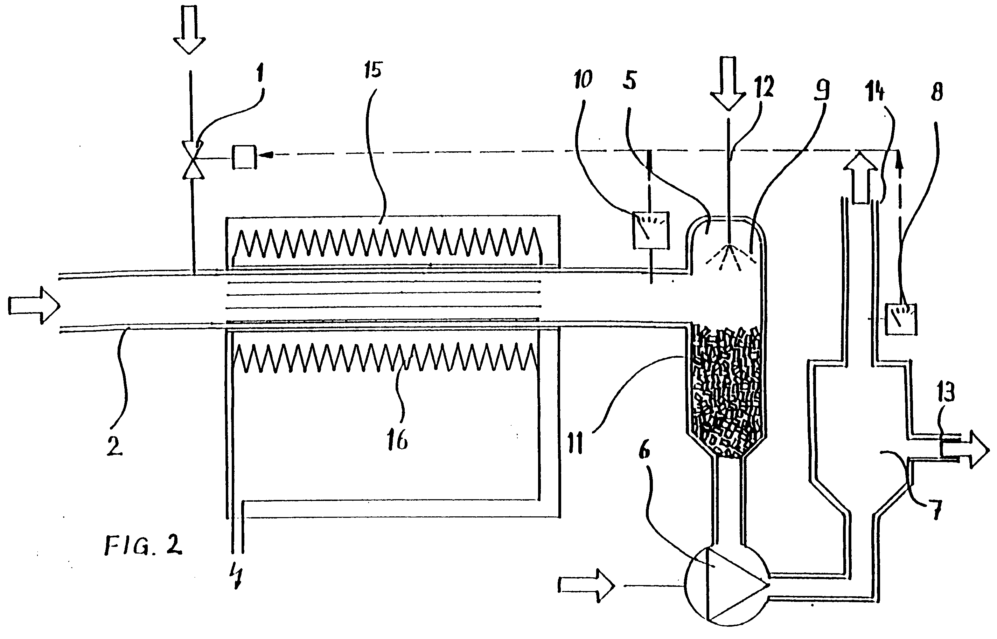

Bei der in der Figur 2 dargestellten Vorrichtung handelt es sich um die Anwendung der thermischen Verbrennung. Abgesehen davon handelt es sich bei der Vorrichtung gemäß Figur 2 um die gleichen Bauteile wie sie in der Figur 1 dargestellt sind, weshalb in gleicher Weise verwendete Bauteile in beiden Figuren mit den gleichen Bezugszeichen versehen sind.

Die über das Rohr 2 zugeführten Abgase werden hier durch den Hochtemperaturofen 15 geleitet, der mittels des elektrischen Erhitzers 16 auf eine Temperatur von 850 bis 1200°C aufgeheizt wird. Im Bereich des Hochtemperaturofens 15 erfolgt dann die thermische Verbrennung der Abgase, die anschließend wie bei der Vorrichtung gemäß Figur 1 einer Kühlung und Separierung unterworfen werden. Auch bei der Vorrichtung gemäß Figur 2 ist es möglich, die Messergebnisse des Meßinstruments 8 und des Temperaturfühlers 10 zu kombinieren, um daraus ein Steuersignal für das Regelventil 1 abzuleiten.

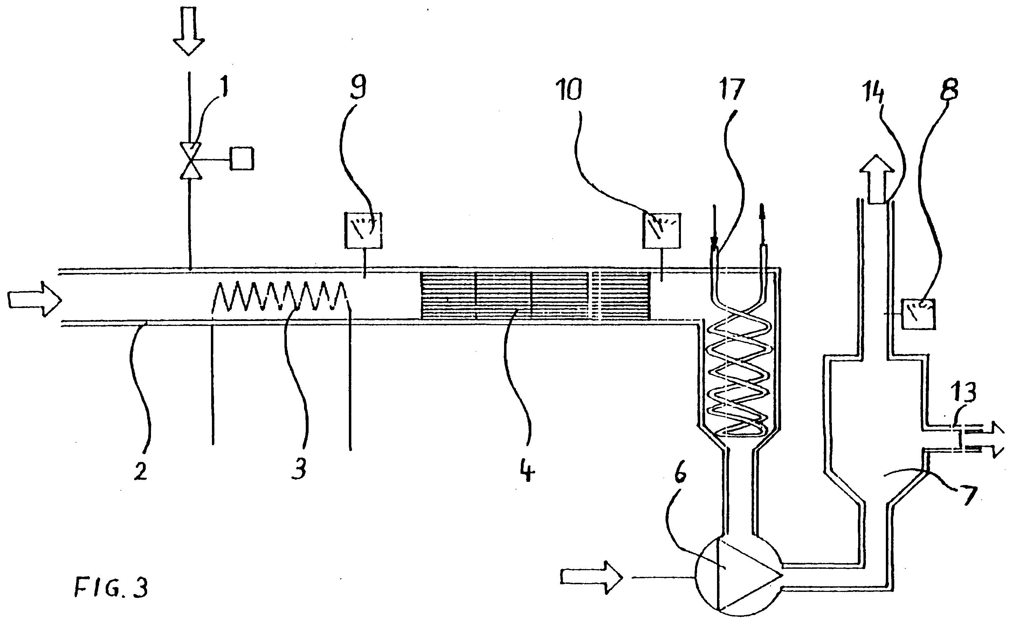

Bei der in der Figur 3 dargestellten Vorrichtung handelt es sich um eine Vorrichtung zur katalytischen Abgasreinigung gemäß Figur 1, wobei jedoch anstelle des Sprühkondensators 5 ein Wärmetauscher 17 zur Kühlung der gasförmigen Reaktionsprodukte vorgesehen ist. Abgesehen davon handelt es sich um die gleichen Bauteile wie in Figur 1 dargestellt, weshalb in gleicher Weise verwendete Bauteile in beiden Figuren mit den gleichen Bezugszeichen versehen sind.

Allgemein sind zur Kühlung der gasförmigen Reaktionsprodukte bei Anwendung einer Flüssigkeitsring-Vakuumpumpe ein Sprühkondensator oder Wärmetauscher geeignet, während bei Anwendung einer Drehschieberpumpe ein Wärmetauscher bevorzugt ist.

Im folgenden werden nun detaillierter die Kühlung der gasförmigen Reaktionsprodukte und darauf folgende Schritte beschrieben. In einer bevorzugten Ausführungsform, bei der eine Flüssigkeitsring-Vakuumpumpe, bevorzugt eine Wasserring-Vakuumpumpe, verwendet wird, werden die im Sprühkondensator durch Wasser gekühlten Reaktionsprodukte zusammen mit dem Wasser in die Vakuumpumpe geliefert. Bei diesem Typ einer Vakuumpumpe dient Wasser, vorzugsweise Wasser, das aus dem Kondensator kommt, als Betriebsmittel. Das Wasser wird durch die Fliegkraft gegen die Innenwand der Pumpe geschleudert und bildet an dieser Wand eine Abdichtungsschicht. Bei dieser Ausführungsform ist das Betriebsmittel der Pumpe deshalb unweigerlich mit den Kondensatprodukten gemischt, weshalb dies im Stand der Technik in nachteilhafter Weise auch zu einer Verschmutzung des Betriebsmittels führt.

Das Betriebsmittel wird zusammen mit dem Reaktionsprodukten durch die Pumpe weiter gefördert. Anschließend wird dieses Betriebsmittel, von den gasförmigen Reaktionsprodukten im Separator getrennt.

Wie bereits oben erwähnt, kann die Erfindung auch unter Verwendung einer Drehschieberpumpe durchgeführt werden. Solche Pumpen arbeiten im Gegensatz zu Flüssigkeitsring-Vakuumpumpen mit einem anderen Betriebsmittel (zum Abdichten), bevorzugt Öl. Da eine solche Pumpe eine höhere Betriebstemperatur aufweist, bevorzugt über 100°, ist bevorzugt zur Kühlung der gasförmigen Reaktionsprodukte ein Wärmetauscher vorgesehen. Bedingt durch die höhere Betriebstemperatur der Drehschieberpumpe liegen die gasförmigen Reaktionsprodukte ausschließlich als Gase vor, einschließlich Wasser als Wasserdampf, die an die Atmosphäre abgegeben werden können. Das zusammen mit den gekühlten Reaktionsprodukten durch die Pumpe weiter geförderte Öl wird nun im Separator wiedergewonnen und an die Pumpe zurückgeführt. Durch Rückführung des Öls können bis 99.99 % des Öls zurückgewonnen werden.

Grundsätzlich eignet sich die vorliegende Erfindung zur Reinigung von Abgasen, die aus einer Anlage stammen, die einen relativ hohen Unterdruck erfordert.

Es sei noch darauf hingewiesen, daß der gesamte Reinigungsvorgang in einem geschlossenem System stattfindet, so daß die Reinigung der Abgase in einer für die Umwelt äußerst günstigen Art und Weise durchgeführt wird. Deshalb ist die Bedeutung dieser Erfindung auch im Zusammenhang mit den zunehmenden Anstrengungen im Bereich Umweltschutz zu bewerten. Vakuumpyrolyseanlagen sind seit 1986 in Deutschland gemäß der Gesetzgebung (TA-Luft, 5 B/m SchG) genehmigungspflichtig. Es sind zwar bislang Vorschläge zur Nachbehandlung der von der Pumpe geförderten Stoffe (insbesondere Restgase) ausprobiert worden, z. B. mittels Aktivkohlefilter, diese Vorschläge scheiterten jedoch meistens an dem erforderlichen Aufwand im Verhältnis zu den erzielbaren Resultaten. So konnte bisher keine der bisherigen Vorschläge eine Lösung sowohl der Abgasprobleme wie auch der Wasserverschmutzung in Aussicht stellen.

## Patentansprüche

1. Verfahren zur Verringerung der Betriebsmittelverschmutzung bei Vakuumpumpen bei der Reinigung von Abgasen aus Vakuumpyrolyseanlagen und/oder Extrusionsprozessen mittels Absaugen der Abgase und deren Verbrennen bei Luftzufuhr, **dadurch gekennzeichnet,** daß
(a) die Abgase unmittelbar nach ihrem Entstehen bei kontrollierter Luftzufuhr und einem durch eine Vakuumpumpe (6) erzeugten Unterdruck von 0.5 bis 0.95 bar (500 bis 50 mbar absolut), für Zwecke einer Drehschieberpumpe von 0.5 bis 0.99 bar (500 bis 10 mbar absolut), einer vollständigen Verbrennung unter Erhalt gasförmiger Reaktionsprodukte unterworfen werden,
(b) anschließend die gasförmigen Reaktionsprodukte einer Kühlung auf 10 bis 25°C, für Zwecke einer Drehschieberpumpe auf 10 bis 200°C, zur Vermeidung einer Schädigung der Vakuumpumpe (6) unterworfen werden, und anschließend
(c) die gekühlten gasförmigen Reaktionsprodukte mit der Vakuumpumpe (6) abgesaugt werden.

2. Verfahren nach Anspruch 1, **dadurch gekennzeichnet,** daß die Verbrennung bei Temperaturen von 850 bis 1200 °C durchgeführt wird.

3. Verfahren nach Anspruch 1, **dadurch gekennzeichnet,** daß die Verbrennung in Anwesenheit eines Katalysators (4) bei Temperaturen von 350 bis 500 °C durchgeführt wird.

4. Verfahren nach Anspruch 3, **dadurch gekennzeichnet,** daß als Katalysator (4) ein mit Platin beschichteter Metallträger verwendet wird.

5. Verfahren nach einem der vorhergehenden Ansprüche, **dadurch gekennzeichnet,** daß die abgesaugten Reaktionsprodukte in einen Separator geleitet werden, wobei dieser wasserlösliche Gase sowie aus der Vakuumpumpe ausgetragenes Betriebsmittel und abgesaugtes Kühlwasser aus dem Sprühkondensator vom Gasstrom abscheidet.

6. Verfahren nach einem der vorhergehenden Ansprüche, **dadurch gekennzeichnet,** daß zur Kühlung ein Sprühkondensator (5) oder Wärmeaustauscher verwendet wird.

## Claims

1. Process for reducing the pollution of operating fluids of vacuum pumps when purifying exhaust gases from vacuum pyrolysis installations and/or extrusion processes by means of the extraction of the exhaust gases and the combustion thereof with a supply of air, characterised in that
a) immediately after their formation, the exhaust gases are subjected to complete combustion with a controlled air supply and a negative pressure of 0.5 to 0.95 bar (500 to 50 mbar absolute) generated by a vacuum pump (6), 0.5 to 0.99 bar (500 to 10 mbar absolute) when using a rotary vane pump, resulting in gaseous reaction products,
b) the gaseous reaction products are then cooled to 10 to 25°C, to 10 to 200°C when using a rotary vane pump, in order to prevent damage to the vacuum pump (6), and then
c) the cooled gaseous reaction products are extracted by the vacuum pump (6).

2. Process according to claim 1, characterised in that combustion is carried out at temperatures of 850 to 1200°C.

3. Process according to claim 1, characterised in that combustion is carried out at temperatures of 350 to 500°C in the presence of a catalyst (4).

4. Process according to claim 3, characterised in that a metal support coated with platinum is used as the catalyst (4).

5. Process according to one of the preceding claims, characterised in that the extracted reaction products are advanced to a separator, the latter separating off water-soluble gases and operating fluid discharged from the vacuum pump and extracted cooling water from the spray steam condenser from the gas stream.

6. Process according to one of the preceding claims, characterised in that a spray steam condenser (5) or a heat exchanger is used for cooling.

## Revendications

1. Procédé pour réduire la pollution de fluides de fonctionnement dans des pompes à vide lors de l'épuration de gaz d'échappement provenant d'installations de pyrolyse sous vide et/ou de processus d'extrusion au moyen de l'aspiration des gaz d'échappement et de leur combustion avec amenée d'air, caractérisé en ce que
(a) on soumet les gaz d'échappement immédiatement après leur formation, avec une amenée d'air contrôlée et avec une dépression, produite par une pompe à vide (6), de 0,5 à 0,95 bar (500 à 50 mbar absolu), de 0,5 à 0,99 bar (500 à 10 mbar absolu) dans le cas d'une pompe rotative à palettes, à une combustion complète avec obtention de produits réactionnels gazeux,
(b) on soumet ensuite les produits réactionnels gazeux à un refroidissement jusqu'à 10 à 25 °C, jusqu'à 10 à 200 °C dans le cas d'une pompe rotative à palettes, afin d'éviter la détérioration de la pompe à vide (6), et
(c) on aspire ensuite les produits réactionnels gazeux refroidis avec la pompe à vide (6).

2. Procédé selon la revendication 1, caractérisé en ce que l'on effectue la combustion à des températures allant de 850 à 1.200 °C.

3. Procédé selon la revendication 1, caractérisé en ce que l'on effectue la combustion en présence d'un catalyseur (4) à des températures allant de 350 à 500 °C.

4. Procédé selon la revendication 3, caractérisé en ce que l'on utilise comme catalyseur (4) un support métallique couvert de platine.

5. Procédé selon l'une des revendications précédentes, caractérisé en ce que l'on conduit les produits réactionnels aspirés dans un séparateur qui sépare du courant de gaz des gaz solubles dans l'eau ainsi que des fluides de fonctionnement provenant de la pompe à vide et de l'eau de refroidissement aspirée du condenseur à pulvérisation.

6. Procédé selon l'une des revendications précédentes, caractérisé en ce que l'on utilise pour le refroidissement un condenseur à pulvérisation (5) ou un échangeur de chaleur.
